# EUROPEAN PATENT SPECIFICATION

(11) **EP 1 872 544 B1**
(45) Date of publication and mention of the grant of the patent: **06.11.2013**
(21) Application number: 06758458.1
(22) Date of filing: 20.04.2006
(51) Int. Cl.: H04L 12/66

(54) **MONITORING A QUEUE FOR A COMMUNICATION LINK**
ÜBERWACHUNG EINER WARTESCHLANGE FÜR EINE KOMMUNIKATIONSVERBINDUNG
SURVEILLANCE D'UNE FILE D'ATTENTE ASSOCIEE A UNE LIAISON DE COMMUNICATION

(30) Priority: 20.04.2005 US 111299
(43) Date of publication of application: 02.01.2008
(73) Proprietor: Intel Corporation, Santa Clara, CA 95052 (US)
(72) Inventor: CHAPPELL, Christopher, Chandler, Arizona 85226 (US)
(74) Representative: Dunlop, Hugh Christopher
(86) International application number: PCT/US2006/015008
(87) International publication number: WO 2006/113899

(56) References cited:
- US-A- 5 914 936
- US-B1- 6 762 994
- US-B1- 6 834 053

## Description

### BACKGROUND

Communication networks typically use high speed serial interconnects to route data and/or instructions (hereinafter referred to as "data") between devices in a communication network. Various industry standards and/or proprietary communication protocols are used to facilitate the forwarding of data from one or more source devices to one or more destination devices in the communication network. Some examples of industry standards are the PCI-Express Base Specification, Rev. 1.1, published March 28, 2005, ("the PCI-Express standard") and the Advanced Switching Core Architecture Specification, Rev. 1.0, published December 2003, ("the AS standard").

Devices compliant with the PCI-Express and/or AS standards communicate with each other and forward data between the devices on point-to-point communication links using a three layer communication protocol. This three layer communication protocol may result in the data passing through a physical layer, a data link layer and a transaction layer. At the physical layer, electronic pulses are converted to byte oriented packets and passed to the data link layer. At the data link layer, the packets are validated, acknowledgement packets are generated to the transmitting device and transaction layer packets are passed up to the device. At the transaction layer, the transaction layer packets may indicate to the device to perform an action. This action may include, but is not limited to, forwarding the data onto one or more other devices in the communication network.

Devices compliant with the PCI-Express and/or AS standards each contain a plurality of queues described in these standards as "Virtual Channels," or "VC queues." These VC queues provide a means of supporting multiple independent "logical data flows" over a communication link. This may involve the multiplexing of different data flows on a single communication link between devices. Each device manages VC queue usage with its communication link partner through the use of in-band flow control packets called VC flow control data link layer packets or "VC TC DLLPs." A VC FC DLLP will indicate to the other communication link partner the available space (flow control credits) of a given VC queue. If the flow control credits are exhausted, the communication link partner cannot transmit data on that VC queue until the receiving partner makes space available and sends another VC FC DLLP to indicate space is available.

When a link partner is a switching device with multiple switch ports to one or more other devices, multiple switch ports may utilize the same given VC queue to forward data. If the flow control credits are exhausted for the given VC queue, a ripple effect may result. This ripple effect may lead to congestion as multiple link partners must wait for the exhausted VC queue to replenish its flow control credits before transmitting data to the switching device. This is problematic in situations where an over-utilized VC queue may result in congestion that negatively impacts increasing portions of a communication network.
US-B1-6 834 053 discloses a distributed traffic scheduler comprising monitoring mechanisms which monitor the sum of various classes of queue traffic stored at a given within the class scheduler queues. A number of alarms are raised when respective thresholds, set by a user, for each queue, are exceeded.
US-A-5 914 936 discloses an ATM exchange performing traffic flow control comprising comparison of a single queue length to two threshold levels.
US-B1-6 762 994 discloses a high speed traffic management control using lookup tables to compare statistical information of respective queues each to threshold level information.

### BRIEF DESCRIPTION OF THE DRAWINGS

Fig. 1 is a block diagram of an example electronic system;
Fig. 2 is an example architectural diagram of a capacity manager;
Fig. 3 is an example graphical illustration of elements of the electronic system coupled by an Advanced Switching (AS) fabric;
Fig. 4 is a graphical illustration of an example virtual channel (VC) flow control (FC) data link layer packet (DLLP);
Fig. 5 is a graphical illustration of a portion of an example AS route header;
**Fig. 6** is an example block diagram of a capacity manager monitoring VC queues in a switch element; and
**Fig. 7** is a flow chart of an example method to monitor available space in a VC queue for a communication link.

### DETAILED DESCRIPTION

Examples in this disclosure are generally directed to monitoring a queue for a communication link. A capacity manager is described that monitors available space in a VC queue for a communication link. The capacity manager may compare the available space to available space in another VC queue for the communication link. The capacity manager may then communicate the comparison to an arbiter. The arbiter may modify a parameter for an arbitration scheme to change a utilization rate of the VC queue relative to the other VC queue based on the comparison.

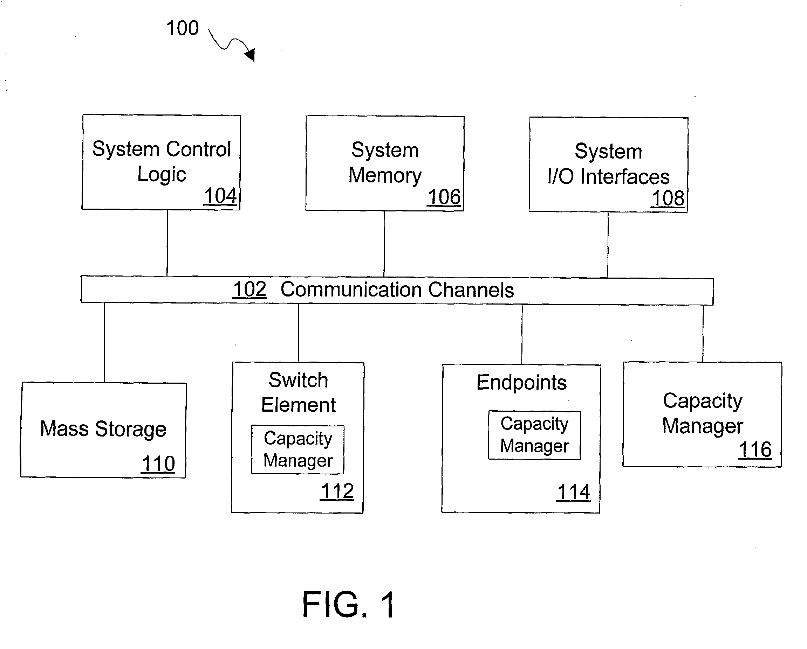

**Fig. 1** is a block diagram of an example electronic system 100. Electronic system 100 may be, for example, a computer, a server, a network switch or a router for a communication network. Electronic system 100 includes communication channels 102, system control logic 104, system memory 106, input/output (I/O) interfaces 108, mass storage 110, switch element 112, endpoints 114, and capacity manager 116, each coupled as depicted.

In one example, system control logic 104 controls the overall operation of electronic system 100 and is intended to represent any of a wide variety of logic device(s) and/or executable content to control the operation of electronic system 100. System control logic 104 may include a microprocessor, network processor, microcontroller, field programmable gate array (FPGA), application specific integrated chip (ASIC), executable content to implement such control features and/or any combination thereof.

System memory 106 stores information such as temporary variables or intermediate information. This information may be stored during execution of instructions by system control logic 104. System memory 106 may also temporarily store data selected for forwarding by electronic system 100 to either elements within electronic system 100 (e.g., switch element 112 and/or endpoints 114) via communication channels 102 or elements remote to electronic system 100 via system I/O interfaces 108. The data may either originate from electronic system 100 (e.g., system control logic 102 or system applications 116) or may be received by electronic system 100 via system I/O interfaces 108.

System applications 116 may provide internal instructions to system control logic 104, for example, to assist in the forwarding of data within/outside of electronic system 100.

Endpoints 114 are elements within electronic system 100 that may serve as I/O endpoints to process the data to be transmitted/received on a communication link. The communication link may be located within electronic system 100 (e.g., included within communication channels 102). The communication link may also be located externally to electronic system 100. For example, endpoints 114 may act as the I/O endpoint for electronic system 100 which is linked to another I/O processing endpoint in another electronic system through system I/O interfaces 108 via direct and/or remote communication links. Direct communication links may be via links utilizing communication standards such as Ethernet, SONET, asynchronous transfer mode (ATM) or the like. Remote communication links may be via wireless links utilizing such wireless communication standards as IEEE 802.11 and/or IEEE 802.16 or the like.

In one example, data may be forwarded through one or more communication links within electronic system 100. These communication links may be included within communication channels 102 and may consist of one or more point-to-point communication links. The data may be forwarded from one endpoint 114 to another endpoint 114 through one or more of these point-to-point communication links. In one implementation, the data is also forwarded within electronic system 100 on a point-to-point communication link with an intermediary such as switch element 112. The data may then be forwarded from the intermediary to another endpoint 114 on another point-to-point communication link.

In one implementation, VC queues are utilized to facilitate the efficient forwarding of the data on a point-to-point communication link. As introduced above, these VC queues may provide a means of supporting multiple independent logical communication channels on the point-to-point communication link. For example, endpoint 114 and switch element 112 may be "link partners" on a point-to-point communication link. As link partners, data forwarded from endpoint 114 to switch element 112 may be logically channeled by multiplexing streams of the data onto one or more VCs queues responsive to and/or resident within switch element 112.

Before the data can be forwarded through the point-to-point communication link, adequate VC queue capacity or space is needed by switch element 112. As will be explained in more detail below, one indication of adequate VC queue capacity or space may be communicated to a link partner by exchanging VC flow control (FC) data link layer packets (DLLPs) with the link partner. VC FC DLLPs may indicate available VC queue space, for example, measured in bits, bytes, d-words (4-bytes), and the like.

In one example, capacity manager 116 may monitor available space in a device's (e.g., switch element 112 or endpoints 114) VC queue for a point-to-point communication link with a link partner device.

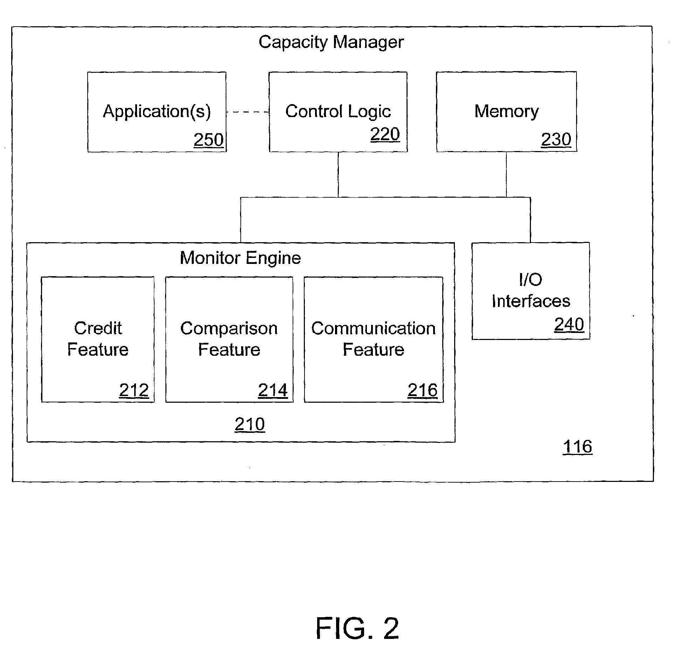

**Fig. 2** is an example architectural diagram of capacity manager 116. In Fig. 2, capacity manager 116 includes a monitor engine 210, control logic 220, memory 230, I/O interfaces 240, and optionally one or more application(s) 250, each coupled as depicted.

In Fig. 2, monitor engine 210 includes a credit feature 212, comparison feature 214 and communication feature 216. These features monitor available space in a VC queue for a communication link, compare the available space in the VC queue to available space in one or more other VC queues for the communication link and communicate the determined available space to an arbiter. The arbiter may then modify one or more parameters for an arbitration scheme to change the utilization rate of the VC queue relative to the one or more other VC queues based on the comparison.

Control logic 220 may control the overall operation of capacity manager 116 and is intended to represent any of a wide variety of logic device(s) and/or executable content to implement the control of capacity manager 116. In this regard, control logic 220 may include of a microprocessor, network processor, microcontroller, FPGA, ASIC, or executable content to implement such control features, and/or any combination thereof. In alternate examples, the features and functionality of control logic 220 may be implemented within monitor engine 210.

According to one example, memory 230 is used by monitor engine 210 to temporarily store information related to the monitoring of and the comparison of available space in a VC queue. Memory 230 may also store executable content. The executable content may be used by control logic 220 to implement an instance of monitor engine 210.

I/O interfaces 240 may provide a communications interface between capacity manager 116 and an electronic system (e.g., electronic system 100). For example, capacity manager 116 is implemented as an element of a computer system. I/O interfaces 240 may provide a communications interface between capacity manager 116 and the computer system via a communication channel. As a result, control logic 220 can receive a series of instructions from application software external to capacity manager 116 via I/O interfaces 240. The series of instructions may invoke control logic 220 to implement one or more features of monitor engine 210.

In one example, capacity manager 116 includes one or more application(s) 250 to provide internal instructions to control logic 220. Such application(s) 250 may be invoked to generate a user interface, e.g., a graphical user interface (GUI), to enable administrative features, and the like. In alternate examples, one or more features of monitor engine 210 may be implemented as an application(s) 250, selectively invoked by control logic 220 to invoke such features.

In one implementation, monitor engine 210 may invoke an instance of credit feature 212 to monitor the available space of a VC queue in switch element 112. The VC queue, for example, may be a VC receive and/or transmit queue for a point-to-point communication link to a link partner (e.g., coupled to endpoints 114). Credit feature 212 may temporarily store the available space information in a memory (e.g., memory 230).

Monitor engine 210 may also invoke an instance of comparison feature 214. Comparison feature 214 may access the available space information and then compare the available space in the VC queue relative to one or more other VC queues in switch element 112 for the point-to-point communication link. Monitor engine 210 may then invoke communication feature 216 to communicate the comparison to an arbiter. The arbiter, for example, may modify one or more parameters for an arbitration scheme to change the utilization rate of the VC queue relative to the other VC queues.

In one implementation, capacity manager 116 may be located outside of switch element 112 to monitor available space in a VC queue resident within and/or responsive to switch element 112 and communicate any comparisons of available space to an arbiter within and/or outside of switch element 112.

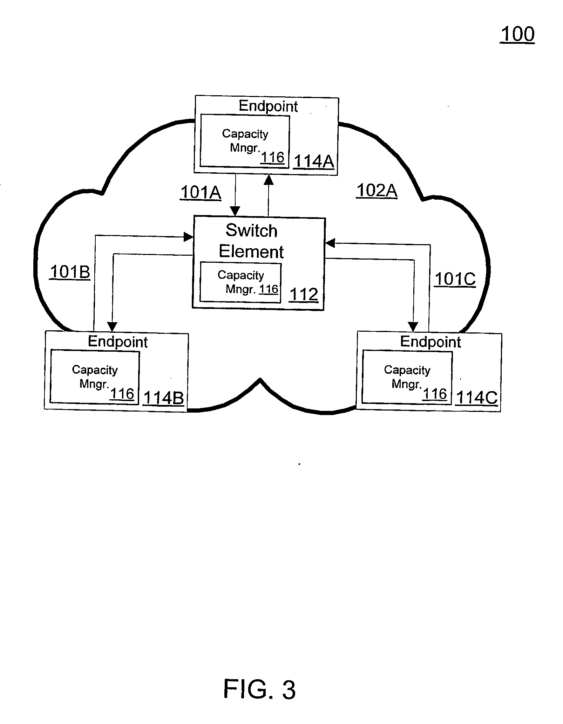

**Fig. 3** is an example graphical illustration of elements of electronic system 100 coupled by an Advanced Switching (AS) fabric 102A. In one example, communication channels 102 may include communication links (e.g., fabric) that may operate in compliance with the AS standard (e.g., AS fabric 102A). Additionally, elements of electronic system 100 (e.g., switch element 112, endpoints 114) may forward data on AS 102A. These elements may also operate in compliance with the AS standard and may route the data via point-to-point communication links 101A-C. In one implementation, the data may be encapsulated by the inclusion of one or more headers containing route and handling information. As described in more detail below, these headers may utilize one or more communication protocols described in the AS standard.

As depicted in Fig. 3, switch element 112 and endpoints 114A-C are coupled to AS fabric 102A. Additionally, switch element 112 is coupled to endpoints 114A-C through point-to-point communication links 101A-C. As mentioned above, AS fabric 102A may be included within communication channels 102 in electronic system 100. As a result, endpoints 114A-C and switch element 112 may communicate through other point-to-point communication links in addition to those depicted in Fig. 3. For example, endpoint 114A may have a point-to-point communication link with endpoint 114B and/or 114C.

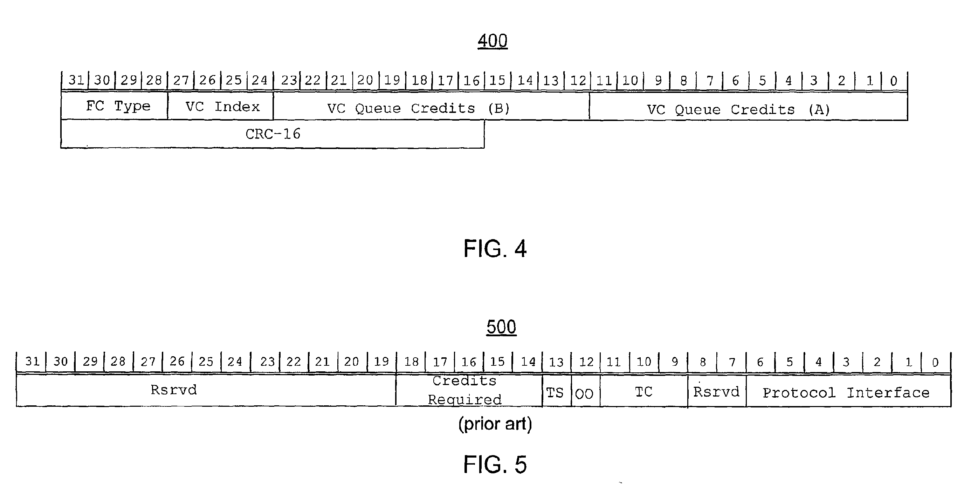

**Fig. 4** is a graphical illustration of an example VC FC DLLP 400. DLLP 400 depicts a packet format that contains 32-bits of data with a 16-bit cyclic redundancy check. DLLP 400 includes fields to indicate flow control type, VC identification (ID) and queue credits for one or more VC queues associated with the VC ID.

In one example, the FC type field in bits 28-31 indicates the type of VC FC credit. The type of VC FC credit may be an initialization VC FC credit or may be an update/refresh VC FC credit, although types of VC FC credits are not limited to only these types of VC FC credits. In one implementation, an initialization VC FC credit is exchanged between link partners when a point-to-point communication link is initiated between devices (e.g., endpoint 1114A and switch element 112). In another implementation, an update VC FC credit is exchanged between link partners after initialization. Update VC FC DLLPs in the format of DLLP 400 may continue to be exchanged at a given interval. The interval is not limited to only a particular given/fixed interval. The interval, for example, may vary based on such factors as link congestion, caused by, for example, VC queues lacking enough available space to forward data.

The VC index field in bits 24-27 indicates what given VC ID(s) is associated with the VC FC DLLP being exchanged between the link partners. In one implementation, the VC index field is associated with the AS standard's assignment of one or more VC identification numbers (IDs) to a given VC index. The assignments may be based on the type of VC queue being either a "bypass capable" or "ordered only." A bypass capable VC has both a bypass queue and an ordered queue. As a result, only one VC ID is associated with a given VC index number for a bypass capable VC. An ordered only VC contains just an ordered queue. As a result, two VC IDs are associated with a given VC index number for an ordered only VC.

In one example, if a VC FC DLLP is associated with a bypass capable VC, the VC queue credits (B) field in bits 12-23 will indicate the amount of queue credits (e.g., space available in bits, bytes or d-words) in the bypass queue and the VC queue credits (A) field in bits 0-11 will indicate the amount of credits in the ordered queue. If the VC FC DLLP is associated with an ordered only VC, then the VC queue credits (B) field will indicate the amount of queue credits for one VC ID and the VC queue credits (A) will indicate the amount of queue credits for another VC ID.

The AS and PCI-Express standards describe a number of congestion management techniques, one of which is a credit-based flow control technique that ensures that data is not lost due to congestion. For example, communication link partners in a communication network (e.g., switch element 112 and endpoints 114A-C) exchange flow control credit information to guarantee that the receiving end of a communication link has the available space or capacity in a VC queue to accept data.

Flow control credits are computed on a VC-basis by the receiving end of the communication link and communicated to the transmitting end of the communication link. Typically, data is transmitted only when there are enough credits available for a particular VC queue to receive the data. Upon sending data, the transmitting end of the communication link debits its available credit account by an amount of flow control credits that reflects a size of the data. As the receiving end of the communication link processes the received data (e.g., performs handling and/or routing functions), space is made available on the corresponding VC queue. In one implementation, an update VC FC DLLP in the format of DLLP 400 is returned to the transmission end of the communication link. After receiving the update VC FC DLLP, the transmission end of the communication link may then update its available credit account to match the available credits indicated in the update VC FC DLLP.

**Fig. 5** is a graphical illustration of a portion of an example AS route header 500. AS route header 500 depicts a typical AS route header format containing 32-bits of data. The AS standard describes the 32-bits of data as including fields to indicate credits required, VC type specific (TS), ordered only (OO) traffic class (TC) and protocol interface (PI).

In one implementation, the credits required field in bits 14-18 indicates the amount of credits that are needed to forward data through a VC queue for a communication link. For example, the data (including a packet header in the format of AS route header 500) may require 128 bytes (16 d-words) of VC queue space to be forwarded through the VC queue. As a result, bits 14-18 are selectively asserted to indicate that credits amounting to 128 bytes are required to forward the data.

In one implementation, the TS field in bit 13 indicates whether bypass or ordered VC queue credits are to be consumed as the data is routed through a VC queue. For example, if bit 13 is asserted, the data consumes bypass credit and is bypass-able. If bit 13 is not asserted, the data consumes ordered credit and is not bypassable.

In one implementation, the OO field in bit 12 indicates what type of VC queue the data is routed through. For example, if bit 12 is asserted, the data is routed through an ordered-only VC queue. If bit 12 is not asserted, the data can be routed through either the bypassable or ordered queue of a bypass capable VC queue.

In one implementation, the traffic class (TC) field in bits 9-11 indicate the traffic class associated with the data. The AS standard describes several TCs that, for example, enable class of service differentiation for different types of data to be forwarded on an AS fabric. To facilitate the- efficient transmission of the data, one or more TCs may be mapped to a given VC queue ("TC-to-VC mapping"). Thus, the TC field may indicate the given VC queue data is routed through based on the TC-to-VC mapping.

In one implementation, the PI field in bits 0-6 identifies the type of data being routed through a VC queue the type of data may indicate specific AS fabric transport services performed on the data as it is forwarded through elements on an AS fabric. For example, transportation services such as congestion management, multicast, and segmentation and reassembly, although AS fabric transport services are not limited to these examples. The AS standard assigns these transportation services to a particular PI. For example, segmentation and reassembly transportation services are assigned to a particular PI called "PI-2." As a result, bits 0-6 in AS route header 500 may be selectively asserted to indicate PI-2 if the data is associated with segmentation and reassembly transportation services.

In one example, switch element 112 and/or endpoints 114 may have resources (e.g., an ASIC, FPGA, special function controller or embedded processor, other hardware device and firmware or software) to perform transportation services assigned to a given PI. These resources may be referred to as "PI processing elements" and may reside within and/or are responsive to switch element 112 and/or endpoints 114. In an example implementation, data to be forwarded through a VC queue may be routed to these PI processing elements based on the PI indicated in PI field of an AS route header in the format of AS route header 500.

Bits 19-31 and 8-9 are reserved for other types of AS route information. This information may further facilitate the forwarding of the data through an AS fabric.

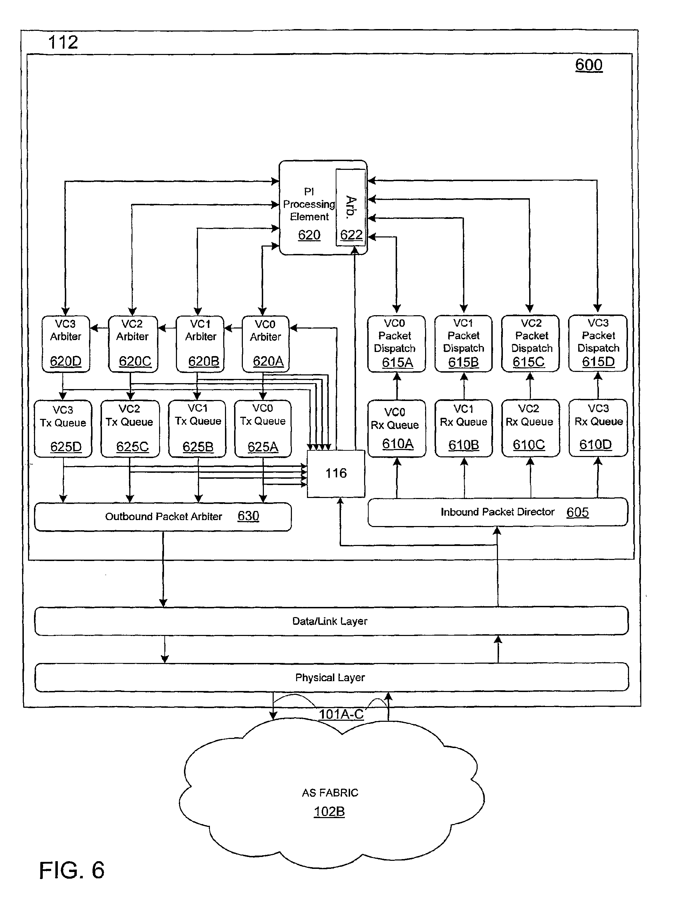

**Fig. 6** is an example block diagram of a capacity manager 116 monitoring VC queues in switch element 112. Switch element 112 is shown in Fig. 6 as including an AS transaction layer 600 having a four VC receive and transmit path, although the disclosure is not limited to a four VC receive and transmit path.

In one implementation, data is received by switch element 112 from AS fabric 102A over a point-to-point communication link (e.g., point-to-point communication link 101A-C). The data is passed from the physical link layer to the AS data/link layer. In the AS data/link layer, the data is validated, acknowledgement data may be generated and transmitted to the transmitting device (e.g. endpoints 114A-C), and one or more transaction layer packets are generated from the data and are passed to the inbound packet director 605.

In one example, the transaction layer packet passed to inbound packet director 605 includes an AS route header in the format of AS route header 500. Inbound packet director 605 reads the TC field in the AS route header and writes the transaction layer packet to a VC receive queue 610A-D based at least in part on the TC-to-VC mapping that is stored at (or is otherwise accessible by) the inbound packet director 605. In the example of Fig. 6, the transaction layer packet may be routed to one of the four VC receive queues 610A-D.

At lease one VC receive queue 610A-D may be implemented as a first-in-first-out (FIFO) queue that passes transaction layer packets to its corresponding VC packet dispatch unit 615A-D in the order received. For example, packets on VC receive queue 610C are passed to its corresponding VC packet dispatch unit 615C.

Once the transaction layer packet reaches the head of a VC receive queue, the packet dispatch reads the protocol interface field in the AS route header and based on the PI indicated, notifies an arbiter 622 for a PI processing element(s) 620. The notification may be that a transaction layer packet awaits forwarding. In one implementation, arbiter 622 arbitrates between multiple notifications sent by VC packet dispatch units 615A-D and selects a VC queue using an arbitration scheme. An arbitration scheme may include, but is not limited to, round-robin, weighted round-robin, or round robin including a fairness protocol.

In one implementation, once PI processing element(s) 620 completes its handling/processing of the transaction layer packet, it notifies one of the four VC arbiters 620A-D. The particular VC arbiter notified, for example, is based on the TC field in the AS route header and the corresponding TC-to-VC mapping for the transmit queues. This TC-to-VC mapping is stored at (or is otherwise accessible by) the processing element(s) 620.

In one example, multiple PI processing element(s) 620 may be notifying a given VC arbiter 620A-D that data is ready to be forwarded. Arbiter 620A-D may arbitrate between the multiple notifications and may select which PI processing element(s) 620 to allow to forward the data to its corresponding VC transmit queue 625A-D. The selection may be made utilizing an arbitration scheme that may include but is not limited to those arbitration schemes mentioned above.

At least one VC transmit queue 625A-D may be implemented as a FIFO queue. As a result, once the transaction layer packet reaches the head of a FIFO VC transmit queue, the VC transmit queue notifies outbound packet arbiter 630 that a transaction layer packet is ready for transmission. After notification, outbound packet arbiter 630 may read the credits required field in the AS route header. Outbound packet arbiter 630 may then determine if switch element 112's link partner (e.g., endpoints 114A-C) has sufficient VC receive queue credits to receive the data associated with the transaction layer packet over that VC. If the link partner has adequate credits, outbound packet arbiter 630 passes down the data in the transaction layer packet to the AS data/link layer where the data is further passed down to the physical link layer and transmitted on a point-to-point communication link in AS fabric 102A.

In one implementation capacity manager 116 monitors VC queue capacities in VC receive queues 610A-D by reading the update VC FC DLLPs transmitted by inbound packet director 605 Capacity manager 116 may then compare the available space in a given VC receive queue to one or more other VC receive queues. Capacity manager 116 may then communicate that comparison to, for example, arbiter 622. Arbiter 622 may then modify one or more parameters for an arbitration scheme that may change the utilization rate of the given VC receive queue relative to the one or more other VC receive queues.

In one example, arbiter 622 may use a weighted round robin (WWR) arbitration scheme. If the comparison shows an imbalance (e.g., greater than a 10% difference) in the available space of one VC receive queue compared to other VC receive queues, one or more parameters (e.g., algorithm coefficients) to the WWR arbitration scheme may be modified. The modification may change the utilization rate of that VC queue by the arbiter to equalize that VC receive queue's available space as compared to the other VC receive queues.

In one implementation, capacity manager 116 monitors available space in VC transmit queues 625A-D by starting from a given credit capacity for a given VC transmit queue. Capacity manager 116 may then read the credits required field of the AS route header for a transaction layer packet written into a given VC transmit queue (e.g., by PI processing element(s) 620). Capacity manager 116 may then subtract from the given credit capacity the credits indicated in the AS route header. Then when the transaction layer packet is transmitted from a given transmit VC queue, the capacity manager 116 adds back the credits indicated in the AS route header. Capacity manager 116 may maintain an available space table reflecting this credit capacity accounting in a memory (e.g., memory 230).

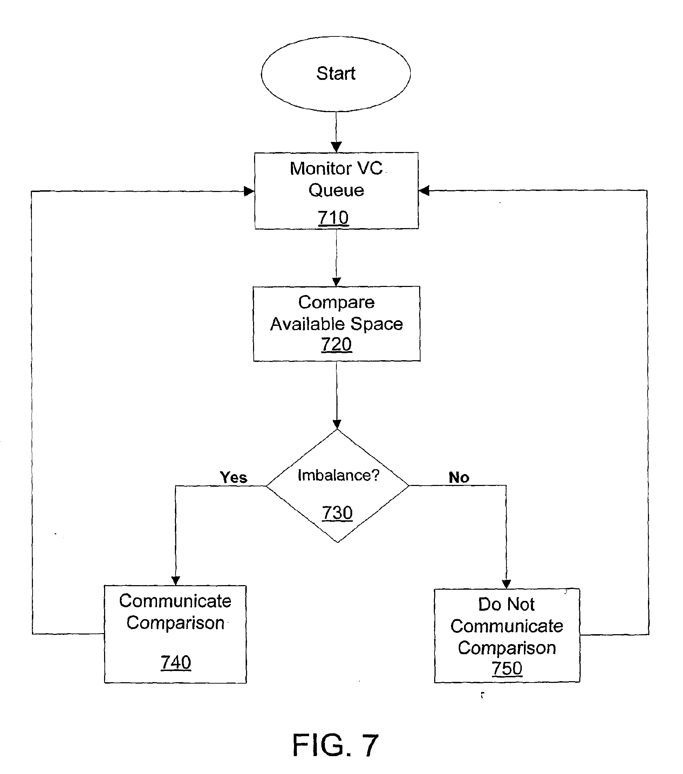

**Fig. 7** is a flow chart of an example method to monitor available space in a VC queue for a communication link. The method, for example may be for AS transaction layer 600's four VC receive and transmit path depicted in Fig. 6. In block 710, in response to control logic 220, monitor engine 210 invokes an instance of credit feature 212.

In one implementation, if monitoring available space in VC receive queues 610A-D, credit feature 212 reads the VC queue credit fields of an update VC FC DLLP transmitted by inbound packet director 605. The update VC FC DLLP may be in the format of DLLP 400 and may be associated with a given VC receive queue. Credit feature 212 may then temporarily store (e.g., in memory 230) the indicated available space in an available space table for the given VC receive queue.

In one implementation, if monitoring available space in VC transmit queues 625A-D, credit feature 212 reads the credits required field of a AS route header. The AS route header may be for a transaction layer packet written into a VC transmit queue (e.g., VC transmit queue 625A-D) by PI processing element(s) 620. Credit feature 212 may access an available space table for the VC transmit queue from a memory (e.g., memory 230). Credit feature 212 may then subtract the indicated credits from the available space table to update that table. Then when the transaction layer packet is transmitted from the VC transmit queue, credit feature 212 accesses the table and adds back the credits indicated in the AS route header to update the table again.

In block 720, monitor engine 210 invokes an instance of comparison feature 214 to compare the available space in a VC queue compared to one or more other VC queues. For example, comparison feature 214 may compare the available space in VC receive queue 610A relative to VC receive queues 610B-C. Comparison feature 214 may access the available space tables for VC receive queues 610A-D. Comparison feature 214 may then compare the available space in VC receive queue 610A to the available space in VC receive queues 610B-D.

In block 730, comparison feature 214 determines if the comparison of the available space in a VC queue shows an imbalance. For example, comparison feature 214's comparison may show that VC receive queue 610A has available space of less than 10% and VC receive queues 610B-D have an average available space that is higher than 10% (e.g., 15% or 20%). In one implementation, comparison feature 214 may determine that this difference in available space equates to an imbalance. If comparison feature 214 determines an imbalance exists, the process moves to block 740. If comparison feature 214 determines that no imbalance exists, the process moves to block 750.

In block 740, monitor engine 210 invokes an instance of communication feature 216 to communicate the results of the comparison by comparison feature 214 to an arbiter. For example, communication feature 216 may communicate the comparison information (e.g., the level of the imbalance) to arbiter 622. Arbiter 622, based on the comparison may modify one or more parameters of an arbitration scheme used to decide which transaction layer packet to process from a given VC receive queue. This parameter modification may change the utilization rate of VC receive queue 610A relative to VC receive queues 610B-D and thus reduce the imbalance. The process may then start over to monitor any of the VC receive queues in the four VC receive and transmit path depicted in Fig. 6. The monitoring and resulting comparison(s) may occur, for example, on a periodic or a continual basis.

In block 750, since no imbalance was determined by comparison feature 214, the comparison is not communicated to an arbiter. The process may then start over to monitor any of the VC receive queues in the four VC receive and transmit path depicted in Fig. 6.

Referring again to the illustration of electronic system 100 in **Fig. 1****.** Switch element 114 may represent an element of electronic system 100 that may act as an intermediary to forward or process data transmitted within electronic system 100 (e.g., on AS fabric 102A). In that regard, switch element 112 may include one or more of a switch blade or a router for electronic system 100.

Endpoints 114 may represent elements of electronic system 100 which act as either an input (ingress) or output (egress) node situated on communication channels 102. Endpoints 114 may represent any of a number of hardware and/or software element(s) to receive and transmit data. In this regard, according to one example, endpoints 114 may include one or more of a bridge, a microprocessor, network processor, software application, embedded logic, or the like.

As mentioned above, capacity manager 116 may be encompassed within switch element 112 or endpoints 114. Alternatively, capacity manager 116 may be responsive to or communicatively coupled to switch element 112 and endpoints 114 through communication channels 102.

According to one example, capacity manager 116 may be implemented in hardware, software, firmware, or any combination thereof. In this regard, capacity manager 116 may be implemented as one or more of an ASIC, special function controller or processor, FPGA, other hardware device and firmware or software to perform at least the functions described in this disclosure.

System memory 106 and/or memory 230 may include a wide variety of memory media including but not limited to volatile memory, non-volatile memory, flash, programmable variables or states, random access memory (RAM), read-only memory (ROM), flash, or other static or dynamic storage media.

In one implementation, memory responsive to a device (e.g., switch element 112 or endpoints 114) may include one or more VC queues for a communication link. This memory may include RAM. RAM may include, but is not limited to, ferroelectric RAM (FRAM), dynamic RAM (DRAM), static RAM (SRAM), extended data output RAM (EDO RAM), synchronous DRAM (SDRAM).

In one example, machine-readable instructions can be provided to system memory 106 and/or memory 230 from a form of machine-accessible medium. A machine-accessible medium may represent any mechanism that provides (i.e., stores and/or transmits) information in a form readable by a machine (e.g., switch element 112 or endpoints 114). For example, a machine-accessible medium may include: ROM; RAM; magnetic disk storage media; optical storage media; flash memory devices; electrical, optical, acoustical or other form of propagated signals (e.g., carrier waves, infrared signals, digital signals); and the like.

In the previous descriptions, for the purpose of explanation, numerous specific details were set forth in order to provide an understanding of this disclosure. It will be apparent that the disclosure can be practiced without these specific details. In other instances, structures and devices were shown in block diagram form in order to avoid obscuring the disclosure.

References made in the specification to the term "responsive to" are not limited to responsiveness to only a particular feature and/or structure. A feature may also be "responsive to" another feature and/or structure and also be located within that feature and/or structure. Additionally, the term "responsive to" may also be synonymous with other terms such as "communicatively coupled to" or "operatively coupled to," although the term is not limited in his regard.

## Claims

1. A method comprising the steps of:
with a capacity manager:
monitoring available space in a virtual channel (VC) queue for a communication link; **characterized by**
comparing the available space in the monitored VC queue to available space in another VC queue for the communication link;
determining if an imbalance in the available space in the monitored VC queue compared to the available space in the other VC queue for the communication link exists; and
if an imbalance exists, communicating the comparison to an arbiter (622); and,
by the arbiter, modifying a parameter for an arbitration scheme to change a utilization rate of the monitored VC queue relative to the other VC queue to equalize the available space of the monitored VC queue as compared to the other VC queue.

2. A method according to claim 1. wherein the VC queue comprises a VC receive queue for a device on a communication network, wherein the device receives data on the communication link from a link partner in the communication network.

3. A method according to claim 2, wherein available space comprises available space to receive the data into the VC receive queue.

4. A method according to claim 3, wherein the data is received by the device in compliance with a Peripheral Component Interconnect (PCI) Express standard.

5. A method according to claim 3, wherein the data is received by the device in compliance with an Advanced Switching (AS) standard.

6. A method according to claim 5, wherein the arbiter is for a protocol interface (PI) processing element, the PI processing element responsive to the device.

7. A method according to claim 5, wherein monitoring available space in the VC receive queue comprises reading flow control credit data link layer packets transmitted between the device and the link partner.

8. A method according to claim 1, wherein the VC queue comprises a VC transmit queue for a device on a communication network, wherein the device forwards data on the communication link to a link partner in the communication network.

9. A method according to claim 8, wherein available space comprises available space to receive the data into the VC transmit queue.

10. A method according to claim 8, wherein the data is forwarded by the device in compliance with an Advanced Switching (AS) standard.

11. A method according to claim 8, wherein monitoring available space in the VC transmit queue comprises reading an AS route header associated with the data forwarded through the VC transmit queue.

12. A method according to claim 1, wherein the arbitration scheme comprises a weighted round robin arbitration scheme.

13. The method of claim 1:
wherein the communication link is a point-to- point communication link (101A-C) for a device operating in compliance with an Advanced Switching (AS) standard, wherein the monitored VC queue is a receive queue for the point-to-point communication link (101A-C), and wherein the device receives data on the point-to-point communication link (101A-C) from a link partner in a communication network; and
wherein communicating the comparison to the arbiter includes communicating the comparison to an arbiter (622) for a protocol interface (PI) processing element responsive to the device, wherein the arbiter (622) modifies one or more parameters for a weighted round robin arbitration scheme based on the comparison, the modification to change a utilization rate of the monitored VC receive queue by the PI processing element relative to the other VC receive queue.

14. A method according to claim 13, wherein monitoring available space in the VC receive queue comprises reading flow control credit data link layer packets transmitted between the device and the link partner.

15. A method according to claim 14, wherein the PI processing element comprises a PI processing element to facilitate transportation services to include segmentation and reassembly of the data received by the device on the communication link.

16. An apparatus comprising:
a capacity manager (116);
an arbiter (622);
wherein the capacity manager (116) is adapted to:
monitor available space in a virtual channel (VC) queue for a communication link, **characterized in that** the capacity manager is adapted to
compare the available space in the monitored VC queue to available space in another VC queue for the communication link,
determine if an imbalance in the available space in the monitored VC queue compared to the available space in the other VC queue for the communication link exists; and
if an imbalance exists, communicate the comparison to the arbiter (622), and
wherein the arbiter (622) is adapted to modify a parameter for an arbitration scheme to change a utilization rate of the monitored VC queue relative to the other VC queue based on the comparison to equalize the available space of the monitored VC queue as compared to the other VC receive queue.

17. An apparatus according to claim 16, wherein the VC queue comprises a VC receive queue for a device on a communication network, wherein the device is adapted to receive data on the communication link from a link partner in the communication network.

18. An apparatus according to claim 17, wherein the data is received by the device in compliance with an Advanced Switching (AS) standard.

19. An apparatus according to claim 18, wherein the processing element comprises a protocol interface processing element responsive to the device.

20. An apparatus according to claim 18, wherein to monitor available space in the VC receive queue comprises the capacity manager to read flow control data link layer packets transmitted between the device and the link partner.

21. An apparatus according to claim 16, wherein the VC queue comprises a VC transmit queue for a device on a communication network, wherein the device forwards data on the communication link to a link partner in the communication network.

22. An apparatus according to claim 21, wherein the data is forwarded by the device in compliance with an Advanced Switching (AS) standard.

23. An apparatus according to claim 22, wherein monitoring available space in the VC transmit queue comprises reading at least a portion of an AS route header, the AS route header associated with a transaction layer packet forwarded through the VC transmit queue.

24. An apparatus according to claim 16, the apparatus further comprising:
a memory (230) to store executable content; and
a control logic (220), communicatively coupled with the memory (230), to execute the executable content, to implement an instance of the capacity manager (116).

25. A machine-accessible medium for storing a program, which, when executed by a machine causes the machine to perform all of the method steps of claims 1, 2 and 8.

## Patentansprüche

1. Verfahren, umfassend die Schritte:
mit einem Kapazitätsmanager:
Überwachen eines verfügbaren Raums in einer Warteschlange eines virtuellen Kanals (VC) für eine Kommunikationsverbindung; **gekennzeichnet durch**
Vergleichen des verfügbaren Raums in der überwachten VC-Warteschlange mit einem verfügbaren Raum in einer anderen VC-Warteschlange für die Kommunikationsverbindung;
Bestimmen, ob ein Ungleichgewicht im verfügbaren Raum in der überwachten VC-Warteschlange im Vergleich zu dem verfügbaren Raum in der anderen VC-Warteschlange für die Kommunikationsverbindung besteht; und
wenn ein Ungleichgewicht besteht, Übermitteln des Vergleichs zu einem Arbiter (622); und
**durch** den Arbiter, Modifizieren eines Parameters für ein Arbitrierungsschema, um eine Nutzungsrate der überwachten VC-Warteschlange relativ zu der anderen VC-Warteschlange zu ändern, um den verfügbaren Raum der überwachten VC-Warteschlange im Vergleich zur anderen VC-Warteschlange auszugleichen.

2. Verfahren nach Anspruch 1, wobei die VC-Warteschlange eine VC-Empfangswarteschlange für eine Vorrichtung auf einem Kommunikationsnetz umfasst, wobei die Vorrichtung Daten über die Kommunikationsverbindung von einem Verbindungspartner im Kommunikationsnetz empfängt.

3. Verfahren nach Anspruch 2, wobei verfügbarer Raum einen verfügbaren Raum zum Empfangen der Daten in der VC-Empfangswarteschlange umfasst.

4. Verfahren nach Anspruch 3, wobei die Daten von der Vorrichtung gemäß einem PCI (Peripheral Component Interconnect)-Express-Standard empfangen werden.

5. Verfahren nach Anspruch 3, wobei die Daten von der Vorrichtung gemäß einem AS (Advanced Switching)-Standard empfangen werden.

6. Verfahren nach Anspruch 5, wobei der Arbiter für ein Protokollschnittstellen (PI)-Verarbeitungselement ist, das auf die Vorrichtung reagiert.

7. Verfahren nach Anspruch 5, wobei das Überwachen von verfügbarem Raum in der VC-Empfangswarteschlange das Lesen von Strömungssteuerguthabendaten-Verbindungsebenenpaketen umfasst, die zwischen der Vorrichtung und dem Verbindungspartner gesendet werden.

8. Verfahren nach Anspruch 1, wobei die VC-Warteschlange eine VC-Sendewarteschlange für eine Vorrichtung auf einem Kommunikationsnetz umfasst, wobei die Vorrichtung Daten auf der Kommunikationsverbindung zu einem Verbindungspartner im Kommunikationsnetz weiterleitet.

9. Verfahren nach Anspruch 8, wobei verfügbarer Raum verfügbaren Raum zum Empfangen der Daten in der VC-Sendewarteschlange umfasst.

10. Verfahren nach Anspruch 8, wobei die Daten von der Vorrichtung gemäß einem AS (Advanced Switching)-Standard weitergeleitet werden.

11. Verfahren nach Anspruch 8, wobei das Überwachen von verfügbarem Raum in der VC-Sendewarteschlange das Lesen eines AS-Routen-Anfangsblocks umfasst, der mit den Daten verknüpft ist, die durch die VC-Sendewarteschlange weitergeleitet werden.

12. Verfahren nach Anspruch 1, wobei das Arbitrierungsschema ein gewichtetes Rundiaufarbitrierungsschema umfasst.

13. Verfahren nach Anspruch 1:
wobei die Kommunikationsverbindung eine Punkt-zu-Punkt-Kommunikationsverbindung (101A-C) für eine Vorrichtung ist, die gemäß einem AS (Advanced Switching) -Standard betrieben wird, wobei die überwachte -VC-Warteschlange eine Empfangswarteschlange für die Punkt-zu-Punkt-Kommunikationsverbindung (101A-C) ist und wobei die Vorrichtung Daten auf der Punkt-zu-punkt-Kommunikationsverbindung (101A-C) von einem Verbindungspartner in einem Kommunikationsnetz empfängt;
wobei das Übermitteln des Vergleichs zum Arbiter das Übermitteln des Vergleichs zu einem Arbiter (622) für ein Protokollschnittstellen (PI)-Verarbeitungselement enthält, das auf die Vorrichtung reagiert, wobei der Arbiter (622) einen oder mehrere Parameter für ein gewichtetes Rundlaufarbitrierungsschema aufgrund des Vergleichs modifiziert, wobei die Modifizierung eine Nutzungsrate der überwachten VC-Empfangswarteschlange durch das PI-Verarbeitungselement relativ zur anderen VC-Empfangswarteschlange ändert.

14. Verfahren nach Anspruch 13, wobei das Überwachen von verfügbarem Raum in der VC-Empfangswarteschlange das Lesen von Strömungssteuerguthabendaten-Verbindungsebenenpaketen umfasst, die zwischen der Vorrichtung und dem Verbindungspartner gesendet werden.

15. Verfahren nach Anspruch 14, wobei das PI-Verarbeitungselement ein PI-Verarbeitungselement zum Erleichtern von Transportdiensten umfasst, um eine Segmentierung und ein Wiederzusammenfügung der Daten zu beinhalten, die von der Vorrichtung auf der Kommunikationsverbindung empfangen werden.

16. Vorrichtung, umfassend:
einen Kapazitätsmanager (116);
einen Arbiter (622);
wobei der Kapazitätsmanager (116) ausgebildet ist zum:
Überwachen eines verfügbaren Raums in einer Warteschlange eines virtuellen Kanals (VC) für eine Kommunikationsverbindung; **dadurch gekennzeichnet, dass** der Kapazitätsmanager ausgebildet ist zum:
Vergleichen des verfügbaren Raums in der überwachten VC-Warteschlange mit einem verfügbaren Raum in einer anderen VC-Warteschlange für die Kommunikationsverbindung;
Bestimmten, ob ein Ungleichgewicht im verfügbaren Raum in der überwachten VC-Warteschlange im Vergleich zu dem verfügbaren Raum in der anderen VC-Warteschlange für die Kommunikationsverbindung besteht; und
wenn ein Ungleichgewicht besteht, Übermitteln des Vergleichs zu einem Arbiter (622), und
wobei der Arbiter (622) zum Modifizieren eines Parameters für ein Arbitrierungsschema ausgebildet ist, um eine Nutzungsrate der überwachten VC-Warteschlange relativ zu der anderen VC-Warteschlange aufgrund des Vergleichs zu anderen, um den verfügbaren Raum der überwachten VC-Warteschlange im Vergleich zur anderen VC-Warteschlange auszugleichen.

17. Vorrichtung nach Anspruch 16, wobei die VC-Warteschlange eine VC-Empfangswarteschlange für eine Vorrichtung auf einem Kommunikationsnetz umfasst, wobei die Vorrichtung zum Empfangen von Daten auf der Kommunikationsverbindung von einem Verbindungspartner im Kommunikationsnetz ausgebildet ist.

18. Vorrichtung nach Anspruch 17, wobei die Daten von der Vorrichtung gemäß einem AS (Advanced Switching)-Standard empfangen werden.

19. Vorrichtung nach Anspruch 18, wobei das Verarbeitungselement ein Protokollschnittstellen-Verarbeitungselement umfasst, das auf die Vorrichtung reagiert.

20. Vorrichtung nach Anspruch 18, wobei das Überwachen von verfügbarem Raum in der VC-Empfangswarteschlange umfasst, dass der Kapazitätsmanager Strömungssteuerguthabendaten-Verbindungsebenenpakete liest, die zwischen der Vorrichtung und dem Verbindungspartner gesendet werden.

21. Vorrichtung nach Anspruch 16, wobei die VC-Warteschlange eine VC-Sendewarteschlange für eine Vorrichtung auf einem Kommunikationsnetz umfasst, wobei die Vorrichtung Daten auf der Kommunikationsverbindung zu einem Verbindungspartner im Kommunikationsnetz weiterleitet.

22. Vorrichtung nach Anspruch 21, wobei die Daten von der Vorrichtung gemäß einem AS (Advanced Switching)-Standard weitergeleitet werden.

23. Vorrichtung nach Anspruch 22, wobei das Überwachen von verfügbarem Raum in der VC-Sendewarteschlange das Lesen mindestens eines Teils eines AS-Routen-Anfangsblocks umfasst, wobei der AS-Routen-Anfangsblocks mit einem Transaktionsebenenpaket verknüpft ist, das durch die VC-Sendcwarteschzange weitergeleitet wird.

24. Vorrichtung nach Anspruch 16, wobei die Vorrichtung des Weiteren umfasst:
eine Speicher (230) zum Speichern von ausführbarem Inhalt; und
eine Steuerlogik (220), die kommunikativ an den Speicher (230) gekoppelt ist, um den ausführbaren Inhalt auszuführen, um ein Beispiel des Kapazitätsmanagers (116) zu implementieren.

25. Über eine Maschine zugängliches Medium zum Speichern eines Programms, das, wenn es von der Maschine ausgeführt wird, die Maschine veranlasst, alle der Verfahrensschritte von Ansprüchen 1, 2 und 8 auszuführen.

## Revendications

1. Procédé comprenant les étapes :
avec un gestionnaire de capacité :
de surveillance d'un espace disponible dans une file d'attente de canal virtuel (VC) pour une liaison de communication ; **caractérisé par**
la comparaison de l'espace disponible dans la file d'attente de VC surveillée à un espace disponible dans une autre file d'attente de VC pour la liaison de communication ;
la détermination si un déséquilibre entre l'espace disponible dans la file d'attente de VC surveillée et l'espace disponible dans l'autre file d'attente de VC pour la liaison de communication existe ; et
si un déséquilibre existe, la communication de la comparaison à un arbitre (622) ; et
par l'arbitre, de modification d'un paramètre pour qu'une méthode d'arbitrage modifie un taux d'utilisation de la file d'attente de VC surveillée par rapport à l'autre file d'attente de VC pour égaliser l'espace disponible de la file d'attente de VC surveillée tel que comparé à l'autre file d'attente de VC.

2. Procédé selon la revendication 1, dans lequel la file d'attente de VC comprend une file d'attente de réception de VC pour un dispositif dans un réseau de communication, dans lequel le dispositif reçoit des données sur la liaison de communication d'un partenaire de liaison dans le réseau de communication.

3. Procédé selon la revendication 2, dans lequel l'espace disponible comprend l'espace disponible pour recevoir les données dans la file d'attente de réception de VC.

4. Procédé selon la revendication 3, dans lequel les données sont reçues par le dispositif en conformité avec une norme PCI (Peripheral Component Interconnect) Express.

5. Procédé selon la revendication 3, dans lequel les données sont reçues par le dispositif en conformité avec une norme AS (Advanced Switching).

6. Procédé selon la revendication 5, dans lequel l'arbitre sert d'élément de traitement d'interface de protocole (PI), l'élément de traitement de PI réagissant au dispositif.

7. Procédé selon la revendication 5, dans lequel la surveillance de l'espace disponible dans la file d'attente de réception de VC comprend la lecture des paquets de couche de liaison de données de crédit de contrôle de flux transmis entre le dispositif et le partenaire de liaison.

8. Procédé selon la revendication 1, dans lequel la file d'attente de VC comprend une file d'attente de transmission de VC pour un dispositif dans un réseau de communication, dans lequel le dispositif achemine les données sur la liaison de communication vers un partenaire de liaison dans le réseau de communication.

9. Procédé selon la revendication 8, dans lequel l'espace disponible comprend l'espace disponible pour recevoir les données dans la file d'attente de transmission de VC.

10. Procède selon la revendication 8, dans lequel les données sont acheminées par le dispositif en conformité avec une norme AS (Advanced Switching).

11. Procédé selon la revendication 8, dans lequel la surveillance de l'espace disponible dans la file d'attente de transmission de VC comprend la lecture de l'en-tête d'acheminement d'AS associé aux données acheminées par l'intermédiaire de la file d'attente de transmission de VC.

12. Procédé selon la revendication 1, dans lequel la méthode d'arbitrage comprend une méthode d'arbitrage à permutation circulaire pondérée.

13. Procédé selon la revendication 1
dans lequel la liaison de communication est une liaison de communication point à point (101 A-C) pour un dispositif fonctionnant en conformité avec une norme AS (Advanced Switching), dans lequel la file d'attente de VC surveillée est une file d'attente de réception pour la liaison de communication point à point (101A-C), et dans lequel le dispositif reçoit des données sur la liaison de communication point à point (101A-C) d'un partenaire de liaison dans un réseau de communication ; et
dans lequel la communication de la comparaison à l'arbitre comprend la communication de la comparaison à un arbitre (622) pour un élément de traitement d'interface de protocole (PI) réagissant au dispositif, dans lequel l'arbitre (622) modifié un ou plusieurs paramètres pour une méthode d'arbitrage à permutation circulaire pondérée sur la base de la comparaison, la modification servant à modifier un taux d'utilisation de la file d'attente de réception de VC surveillée par l'élément de traitement de PI par rapport à l'autre file d'attente de réception de VC.

14. Procédé selon la revendication 13, dans lequel la surveillance de l'espace disponible dans la file d'attente de réception de VC comprend la lecture des paquets de couche de liaison de données de crédit de contrôle de flux transmis entre le dispositif et le partenaire de liaison.

15. Procédé selon la revendication 14, dans lequel l'élément de traitement de Pl comprend un élément de traitement de PI pour faciliter des services de transport pour inclure une segmentation et un réassemblage des données reçues par le dispositif sur la liaison de communication.

16. Appareil comprenant :
un gestionnaire de capacité (116);
un arbitre (622) ;
dans lequel le gestionnaire de capacité (116) est conçu pour :
surveiller l'espace disponible dans une file d'attente de canal virtuel (VC) pour une liaison de communication, **caractérisé en ce que** le gestionnaire de capacité est conçu pour :
comparer l'espace disponible dans la file d'attente de VC surveillée à l'espace disponible dans une autre file d'attente de VC pour la liaison de communication,
déterminer si un déséquilibre entre l'espace disponible dans la file d'attente de VC surveillée et l'espace disponible dans l'autre file d'attente de VC pour la liaison de communication existe ; et
si un déséquilibre existe, communiquer la comparaison à l'arbitre (622), et
dans lequel l'arbitre (622) est conçu pour modifier un paramètre pour une méthode d'arbitrage pour modifier un taux d'utilisation de la file d'attente de VC surveillée par rapport à l'autre file d'attente de VC sur la base de la comparaison pour égaliser l'espace disponible de la file d'attente de VC surveillée tel que comparé à l'autre file d'attente de réception de VC.

17. Appareil selon la revendication 16, dans lequel la file d'attente de VC comprend une file d'attente de réception de VC pour un dispositif dans un réseau de communication, dans lequel le dispositif est conçu pour recevoir des données sur la liaison de communication d'un partenaire de liaison dans le réseau de communication.

18. Appareil selon la revendication 17, dans lequel les données sont reçues par le dispositif en conformité avec une norme AS (Advanced Switching).

19. Appareil selon la revendication 18, dans lequel l'élément de traitement comprend un élément de traitement d'interface de protocole réagissant au dispositif.

20. Appareil selon la revendication 18, qui, pour surveiller l'espace disponible dans la file d'attente de réception de VC, comprend le gestionnaire de capacité pour lire les paquets de couche de liaison de données de contrôle de flux transmis entre le dispositif et le partenaire de liaison.

21. Appareil selon la revendication 16, dans lequel la file d'attente de VC comprend une file d'attente de transmission de VC pour un dispositif dans un réseau de communication, dans lequel le dispositif achemine des données sur la liaison de communication vers un partenaire de liaison dans le réseau de communication.

22. Appareil selon la revendication 21, dans lequel les données sont acheminées par le dispositif en conformité avec une norme AS (Advanced Switching).

23. Appareil selon la revendication 22, dans lequel la surveillance de l'espace disponible dans la file d'attente de transmission de VC comprend la lecture d'au moins une partie d'un en-téte d'acheminement d'AS, l'en-tête d'acheminement d'AS étant associé à un paquet de couche de transaction acheminé par l'intermédiaire de la file d'attente de transmission de VC.

24. Appareil selon la revendication 16, l'appareil comprenant en outre:
une mémoire (230) pour mémoriser un contenu exécutable ; et
une logique de commande (220), couplée en communication à la mémoire (230), pour exécuter le contenu exécutable, pour mettre en oeuvre une instance du gestionnaire de capacité (116).

25. Support accessible par une machine pour mémoriser un programme, qui, lorsqu'il est exécuté par une machine, amène la machine à effectuer toutes les étapes de procédé des revendications 1, 2 et 8.
